(19) Europäisches Patentamt
European Patent Office
Office européen des brevets

(11) **EP 4 693 018 A1**

(12) **EUROPEAN PATENT APPLICATION**

(43) Date of publication:
**11.02.2026 Bulletin 2026/07**

(21) Application number: **25193270.3**

(22) Date of filing: **31.07.2025**

(51) International Patent Classification (IPC):
**G06F 7/483** (2006.01) **G06F 7/499** (2006.01)

(52) Cooperative Patent Classification (CPC):
**G06F 7/49905; G06F 7/483**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH LA MA MD TN**

(30) Priority: **08.08.2024 GB 202411706**

(71) Applicant: **Imagination Technologies Limited**
**Kings Langley**
**Hertfordshire WD4 8LZ (GB)**

(72) Inventors:
• **ROVERS, Kenneth**
  **Kings Langley, WD4 8LZ (GB)**
• **FERRERE, Thomas**
  **Kings Langley, WD4 8LZ (GB)**

(74) Representative: **Page White Farrer**
  **Bedford House**
  **21a John Street**
  **London WC1N 2BF (GB)**

(54) **ENCODING EXCEPTIONAL VALUES IN A FLOATING POINT NUMBER FORMAT**

(57) The discloses relates to a processor which is able to re-encode a normal value of a first floating point format to a normalized floating point format, and re-encode a subnormal value of the first floating point format to the normalized floating point format. According to the disclosure, a subset of the exponent bits of the exponent field of a normalized floating point format is used to encode a predetermined indication of being an exceptional value, wherein a combination of bit values used to encode this predetermined indication does not occur within a range of the exponent field of the normalized floating point format used to represent any possible non-exceptional, normal and subnormal values.

FIGURE 3A

**Description**

CROSS-REFERENCE TO RELATED APPLICATION

This application claims priority from UK patent application GB 2411706.1 filed on 8 August 2024, which is herein incorporated by reference in its entirety.

TECHNICAL FIELD

The present disclosure relates to the encoding of exceptional values (such as infinities and NaNs) in a normalized floating point number format used in a floating point unit (FPU) or other floating point logic circuitry for performing floating point operations.

BACKGROUND

A given processor will comprise execution logic which is configured to recognize a certain predefined instruction set. The instruction set is the fundamental set of definitions of the types of machine code instruction which the processor is configured to recognize and execute. Each type of instruction in the instruction set is defined by its opcode, which specifies the type of operation to be performed. Each type of instruction may further comprise zero or more operand fields depending on the instruction type. For instance some types of instruction may take a single source operand. An example would be a sign injection which flips the sign of the operand value. Other types may take multiple operands. Examples of these include add, multiply or divide, each of which takes two source operands and a destination operand specifying a location at which to place the result. Source operands may be expressed in terms of a location from which to take the source value.

A value waiting to be operated on will be held in a storage element of certain fixed width, typically a register. For example typically, in a reduced instruction set computer (RISC), values are loaded from memory into registers by executing load instructions, then a further instructions may operate on the values from the registers and the results are written back to registers. For instance a first load instruction may be executed to load a first source value from memory into a first register, and a second load instruction may be executed to load a second source value from memory to a second register. Each load instruction takes a source operand specifying a memory address from which to load a value and a destination operand specifying a destination register address in which to place the loaded value. Subsequently, an instruction for combining two values, such as to add, multiply or divide them, may then be executed, specifying register addresses of the first and second registers as its source operands and a destination register address as its destination operand. The result may then be saved back to memory by executing a store instruction, which takes a source operand specifying the register address from which to take the value and a destination operand specifying the memory address to store the value to. Values may also be moved between registers by executing a move instruction.

One category of operation is floating point operations which operate on floating point values expressed in a floating point number format. In order to operate on the value, the value needs to be stored in the storage element (e.g. source register) in accordance with an appropriate floating point number format, and the floating point logic (e.g. FPU) needs to be configured to recognize the floating point format - in other words to know which fields of the register correspond to which features of the floating point number: its significand, its exponent, and in most formats its sign.

A floating point number format comprises an m-bit wide mantissa field ("mant") for specifying a significand, an e-bit wide exponent field ("exp") for specifying an exponent, and usually a sign field which is a single sign bit. The significand determines the precision of the floating point number format and the exponent its range. The number of bits, m and e, of the mantissa and exponent fields respectively are each a non-zero number of bits and typically each greater than one or two bits (otherwise if one of the mantissa field or exponent field is zero bits, the format reverts to either a logarithmic number or a fractional number respectively). Typically, at least for normal values, when the format is interpreted the significand is taken to have an implicit leading 1 relative to the mantissa field, and the exponent may be taken to have an implicit bias (implicit for the present purposes means not expressed explicitly in the mantissa and exponent fields respectively). The value represented according to the floating point number format is then:

$$\text{value (normal)} = (-1)^{\text{sign}} * 2^{(\text{exp}-\text{bias})} * 1.\text{mant}$$

Or if an unsigned format was used - rare for floating point - the corresponding formula would be just $2^{(\text{exp}-\text{bias})} * 1.\text{mant}$.

Note therefore that where it is said that the mantissa field mant specifies the significand and the exponent field exp specifies the exponent, this does not necessarily mean the significand is equal to the raw binary value in the mantissa field mant nor that the exponent is equal to the raw binary value in the exponent field exp: rather, there could also be implicit elements, such as a leading component to the significand or a bias in the exponent. The implicit leading 1 of the significand is typically an implicit property of the number format. The implicit bias may be fixed or in some cases could be programmable via a separate control register. The bias could be zero or non-zero.

On a point of terminology, note that the term "mantissa" is often used to refer to the actual bits in the mantissa field of the number format used in the registers, whilst the significand refers to the coefficient in the scientific notation. I.e. in the case of an implicit leading 1, significand = 1.mantissa. However examples also exist in the literature of the terms being used interchangeably. For the present purposes, "significand" will be used to refer to the coefficient in the scientific notation, and "mantissa field" (mant) will be used to refer to the actual bit field of the number format as used in registers. The mantissa field may be said to specify the significand in the sense that the one determines the other, but not necessarily that they are equal in all formats. On a similar point, note that the exponent in the scientific notation is not necessarily equal to the value in the exponent field of the number format, because of the possible bias, depending on the format. Herein the term "exponent" will be used to refer to the exponent in the scientific notation, and "exponent field" (exp) will be used to refer to the bit field in the number format. I.e. if there is a bias as in the above example, then exponent = exp-bias.

As an example of a specific format, in the IEEE FP16 (half precision) format, m = 10 bits, e = 5 bits, there is a single sign bit, bias = 15, and for normal values the significand has an implicit leading 1 relative to the mantissa field (as shown in the above formula). In the IEEE FP32 (single precision) format, m = 23 bits, e= 8 bits, there is a single sign bit, bias = 127, and for normal values the significand has an implicit leading 1 relative to the mantissa field. In the IEEE FP64 (double precision) format, m = 53 bits, e = 11 bits, there is a single sign bit, bias = 1023, and for normal values the significand has an implicit leading 1.

The floating point format may also support certain combinations of bits that act like escape sequences, i.e. which change the interpretation of the fields of the floating point format compared to the normal interpretation. For instance, in some number formats including those of the IEEE FPn (IEEE 754) standards (FP16, FP32, etc.), when the exponent field is all 0s this changes the interpretation such that the significand is no longer taken to have an implicit leading 1. Such values are known as "subnormal" values (or sometimes "denormal" values), as opposed to "normal" values which have a non-zero exponent field and an implicit leading 1. That is:

$$\text{value (normal)} = (-1)^{sign} * 2^{(exp-bias)} * 1.mant, \qquad \text{if } exp \neq 0$$

$$\text{value (subnormal)} = (-1)^{sign} * 2^{(1-bias)} * 0.mant, \qquad \text{if } exp=0$$

Again a sign bit is technically optional depending on implementation, but is included in most floating point number formats. The bias could be zero or non-zero, and could be fixed or programmable, depending on the number format.

Note: returning to the point of terminology mentioned earlier, for normal values the significand of the scientific notation = 1.mant, and for subnormal values the significand = 0.mant (where mant is the value in the mantissa bit field of the number format as it appears in registers). For both formats the exponent of the scientific notation = exp-bias if a bias is used, or otherwise with no bias the exponent simply equals exp (where exp is the value in the exponent field of the number format as it appears in registers).

One or more further bit-value combinations may also be used to encode exceptional values. These are values that do not represent numbers from the set of Real numbers, either because the result would be a non-real number or because the result is not a numerical value at all. Exceptional values can be either infinity, or NaN ("not a number"). NaNs are treated as distinct from infinities in IEEE 754 standards. A NaN may result for example from an operation attempting to take the square root of a negative number. Formats with a sign bit may support the representation of +-/ infinity and +/-NaN.

For instance, in number formats including at least those of the IEEE 754 standards, when the exponent field exp is all 1s, this indicates that the value is to be treated as an exceptional value. Further, if the exponent field is all 1s and the mantissa field is all 0s, this represents an infinity (which may be +/- infinity depending on the sign bit); and if the exponent field is all 1s while the mantissa field is non-zero, this represents a NaN (which may be +/- NaN depending on the sign bit). In the latter case, optionally a type of the NaN may be encoded into the non-zero mantissa field. E.g. this may be used to distinguish between canonical and non-canonical NaNs, or to encode the cause of the NaN.

## SUMMARY

As recognized herein, there is an issue with the conventional encoding of exceptional values in that it requires reading all of the exponent bits (the entire exponent field) of the floating point number format. This incurs complexity in terms of circuitry in the floating point unit (FPU), which in turn incurs area, power consumption and delay. It would be desirable to adopt an encoding requiring reading fewer bits, at least in some circumstances.

Some operations performed by certain types of instruction in the instruction set may need the ability to combine normal and subnormal values. For example, depending on the operands, an add instruction may be required to add a subnormal value to a normal value, or a multiply instruction may be required to multiply a normal value by a subnormal value, or a divide instruction may be required to divide a normal value by a subnormal value or vice versa. Some operations are more efficiently implemented when all inputs are normalised. One way to enable this is to normalize both the normal and the subnormal value into a common normalized format that represents both values on the same exponential scale (i.e. using a common size of exponent field). Such a format will require at least one extra bit in the exponent field of the normalized format compared to the input format. To normalize them, both input values are re-encoded from the input format to the normalized format, which will comprise re-encoding the exponent fields. Though for the normal value the re-encoding is trivial and in some implementations even "transparent" - i.e. for normal values, if the bias is not changed, then the re-encoding is just adding a zero MSB (most significant bit), which is transparent in the sense that it comes for free in terms of logic. For the typical re-bias, e.g. for FP32 going from a bias of 127 to 255, then this comprises adding 128 which in logic is just a bit copy and a bit flip which is nearly free. So note therefore that the term "re-encode" (or "recode") as used herein does not necessarily imply a complex or costly operation, and in some cases the re-encoding can comprise just a very simple transformation such as adding a 0 MSB or adding a value such as 128 that is a power of 2.

It is recognized herein that this normalized format also presents an opportunity for encoding exceptional values in a more efficient manner. Particularly, adding an extra bit to the exponent field in order to normalize will double the range of the exponent field. However, it is recognized herein that the full extent of the extended range of the exponent field of the normalized format is not all needed for the encoding of the re-encoded exponents of the normalized values. Therefore an otherwise-unused sub-range within the range of the extended exponent field of the normalized format, unused for re-encoding any possible normal or subnormal input value, can be used to encode exceptional values without using all the bits of the exponent field, thus enabling saving on circuit complexity when it comes to detecting exceptional values in the normalized format, which in turn saves on delay (increasing performance), area and/or power.

According to one aspect disclosed herein, there is provided a processor comprising normalization circuitry, the normalization circuitry being configured to re-encode a normal value of a first floating point format to a normalized floating point format and to re-encode a subnormal value of the first floating point format to the normalized floating point format. The first floating point format comprises an m-bit mantissa field for specifying a significand and an e-bit exponent field for specifying an exponent (the exponent field of the normal value being non-zero and the specified significand of the normal value having an implicit leading 1 relative to the mantissa field, whereas the exponent field of the subnormal value is all 0s and the specified significand has an implicit leading 0 relative to the mantissa field). The normalized floating point format also comprises a mantissa field and an exponent field, but the exponent field of the normalized floating point format has at least e+1 exponent bits for both normal and subnormal values for representing the normal and subnormal values on a common exponential scale. The processor also comprises floating point logic circuitry (e.g. a floating point unit, FPU) operable to perform a floating point operation combining the normal and subnormal values, the floating point logic circuitry being configured to perform the floating point operation on the values as re-encoded in the normalized floating point format. The floating point logic circuitry is further able to operate on one or more exceptional values, being configured to operate on each exceptional value represented in the normalized floating point format. The normalized floating point format employs a subset of the exponent bits of the exponent field of the normalized floating point format to encode a predetermined indication of being an exceptional value for each exceptional value, the subset being a plurality of bits but fewer bits than e bits, wherein a combination of bit values used to encode said predetermined indication does not occur within a range of the exponent field of the normalized floating point format used to represent any possible non-exceptional, normal and subnormal values. The floating point logic circuitry is configured to detect the exceptional values as being exceptional values by reading only said subset of exponent bits.

In other words the normalized format uses a sub-range within an unused range of the e+1 bits of the exponent field of the normalized format to encode an exceptional value, the unused range being unused for representing any possible value of the normal or subnormal value. The floating point logic (e.g. FPU) can then be configured to check whether the normalized value is an exceptional value by reading fewer than the e+1 bits of the exponent field of the normalized format.

Hence while in the first (unnormalized) floating point number format any exceptional value may be encoded by the exponent field being all 1s, in the normalized floating point number format an exceptional value is encoded into a subrange of the exponent field and does not require checking all the bits of the exponent field in order to detect the fact of being an exceptional value. Likewise, in embodiments other information such as +/- 0 can be encoded into a subrange to save checking whether all e+1 bits are 0.

In embodiments the floating point logic circuitry is a FPU, i.e. a unit of the processor for executing floating point instructions, and will be exemplified as such in the following Detailed Description. However more generally, any of the teachings herein may apply to any hardware that operates on floating point numbers.

Each exceptional value may be either an infinity or a NaN (not a number).

The mantissa field of the normalized floating point number format may be m bits.

Typically the first (i.e. unnormalized) floating point number format will comprise a sign bit in addition to its exponent and mantissa fields, in which case the normalized format will also comprise a sign bit. In embodiments the first floating point number format may encode the normal value according to the formula $(-1)^{sign} * 2^{(exp-bias)} * 1.mant$, and the subnormal according to (-1)^sign * 2^(1-bias) * 0.mant, where exp is an exponent field of e bits of the respective sequence of bits, mant is a mantissa field of m bits of the respective sequence of bits, sign is a sign bit of the respective sequence of bits, and bias is an optional implicit bias depending on implementation (or equivalently the bias may be described being zero or non-zero depending on implementation).

The first floating point number format may be a standardized format. The first format may be an IEEE format, such as IEEE 754. The first format may be IEEE FP16 (half-precision), FP32 single (precision), FP64 (double precision) or FP128 (quad precision).

The floating point operation may comprise for example adding subtracting, multiplying or dividing the normal and subnormal values, or a more complex operation.

Another issue with the conventional approach to encoding exceptional values is that if it is desired to distinguish between different types of exceptional value, such as to distinguish between infinity and NaN, or to distinguish between different types of NaN, then the FPU has to read not only all the bits of the exponent field in order to detect the presence of an exceptional value at all, but then must also read one or more additional bits of the mantissa field in order to detect the type of exceptional value. For instance in the first (unnormalized) floating point format, infinity may be encoded as exponent all 1s and mantissa field all 0s, and NaN may be encoded exponent field all 1s and mantissa field non-zero, and hence in that format all mantissa field bits need to be checked.

It is recognized herein that in the case of a normalized format, then the otherwise-unused range of the exponent field could also be used to encode the type of the exceptional value as well as the fact of being an exceptional value, thus enabling the FPU to detect the presence and type of an exceptional value without needing to read any bits of the mantissa field, and in embodiments still without having to read all the exponent bits.

Therefore in embodiments, the floating point logic circuitry may be able to operate on exceptional values of different types, and the normalized format may employ a further portion of the exponent bits of the normalized floating point format to encode a type indicator to indicate the type of each exceptional value. In this case, the floating point logic circuitry is configured to detect the type of each exceptional value from the respective type indicator in said further portion, without needing to check the mantissa field of the normalized floating point number format

The subset and the further portion together may be fewer bits than the exponent bits of the normalized floating point format.

In embodiments, one of the different types of exceptional value may be infinity and another of the different types may be a NaN.

Alternatively or additionally, at least some of the exceptional values may be NaNs, and the different types may include at least different types of NaN. For example the different types of NaN may include at least a NaN-boxed NaN and non-Nan-boxed NaN.

In embodiments, said subset of bits of the exponent field may comprises the two most significant bits of the exponent field of the normalized floating point format. E.g. said combination may be both bit values being 1. In further embodiments, said the further portion may be at least one next-most significant bit after the two most significant bits.

In embodiments, the re-encoding for the subnormal value may be performed by: determining a leading zero count, *LZC,* of the bits in the mantissa field of the first format; shifting the bits of the mantissa field of the first floating point format left by an amount *shift* equal to *LZC*+1, thereby giving the mantissa field of the normalized floating point format; and subtracting from the exponent field of the first floating point format an amount equal to (*bias'-bias*)-*shift,* thereby giving the exponent of the normalized floating point format, where *bias'* is an optional bias of the normalized format and *bias* is an optional bias of the first format. For the normal value, the re-encoding may be performed by: determining the exponent field of the first floating point format to be exp = exp' - bias', where exp' is the exponent field of the normalized floating point format; and shifting the bits of the mantissa field of the normalized floating point format right by an amount A = (-bias + 1) - (exp' - bias'), thereby giving the mantissa field of the first floating point format.

In embodiments, the processor may comprise a plurality of normalized-format registers each for holding a value in the normalized floating point format and optionally a plurality of first-format registers each for holding a value in the first floating point format. In such cases, the normalization logic may be configured to perform said normalization automatically when the normal value is loaded into a respective one of the normalized-format registers or moved to the respective normalized format register from one of the first-format registers, and to perform said normalization of the subnormal value automatically when the subnormal value is loaded into a respective one of the normalized format registers or moved to the respective normalized-format register from one of the first-format registers; and the floating point logic circuitry may be configured to take the normal and subnormal values from the respective normalized-format registers to perform the floating point operation on.

In embodiments, the processor may comprise a plurality of normalized-format registers each for holding a value in the normalized floating point format and optionally a plurality of first-format registers each for holding a value in the first floating point format. In this case, the processor may further comprise register write-back circuitry configured to place a result of the floating point operation in a destination register of the normalized-format registers in the normalized format from whence it can be operated on in the normalized floating point format by a further operation; and the processor may further comprise de-normalization logic configured to convert the result from the destination register to the first floating point format when the result is read by software, saved to memory or moved to one of the first-format registers

The processor may be embodied in hardware on an integrated circuit. There may be provided a method of manufacturing, at an integrated circuit manufacturing system, a processor according to any embodiment disclosed herein. There may be provided an integrated circuit definition dataset that, when processed in an integrated circuit manufacturing system, configures the system to manufacture a processor according to any embodiment disclosed herein. There may be provided a non-transitory computer readable storage medium having stored thereon a computer readable description of a processor that, when processed in an integrated circuit manufacturing system, causes the integrated circuit manufacturing system to manufacture an integrated circuit embodying a processor according to any embodiment disclosed herein.

There may be provided an integrated circuit manufacturing system comprising: a non-transitory computer readable storage medium having stored thereon a computer readable description of the processor; a layout processing system configured to process the computer readable description so as to generate a circuit layout description of an integrated circuit embodying the processor; and an integrated circuit generation system configured to manufacture the processor according to the circuit layout description. The layout processing system may be configured to determine positional information for logical components of a circuit derived from the integrated circuit description so as to generate the circuit layout description of the integrated circuit embodying the graphics processing system.

There may be provided computer program code for performing any of the methods described herein. There may be provided non-transitory computer readable storage medium having stored thereon computer readable instructions that, when executed at a computer system, cause the computer system to perform any of the methods described herein.

The above features may be combined as appropriate, as would be apparent to a skilled person, and may be combined with any of the aspects of the examples described herein.

This Summary is provided merely to illustrate some of the concepts disclosed herein and possible implementations thereof. Not everything recited in the Summary section is necessarily intended to be limiting on the scope of the disclosure. Rather, the scope of the present disclosure is limited only by the claims.

## BRIEF DESCRIPTION OF THE DRAWINGS

Examples will now be described in detail with reference to the accompanying drawings in which:

Figure 1 is a schematic block diagram of an example processor according to embodiments of the present disclosure,

Figure 2 is a schematic representation of a first floating point number format,

Figure 3 is a schematic representation of a normalized floating point number format according to embodiments disclosed herein,

Figure 3A is a schematic representation of an encoding of an exceptional value in a normalized floating point number format according to embodiments disclosed herein,

Figure 4 shows a computer system in which a graphics processing system is implemented, and

Figure 5 shows an integrated circuit manufacturing system for generating an integrated circuit embodying a graphics processing system.

The accompanying drawings illustrate various examples. The skilled person will appreciate that the illustrated element boundaries (e.g., boxes, groups of boxes, or other shapes) in the drawings represent one example of the boundaries. It may be that in some examples, one element may be designed as multiple elements or that multiple elements may be designed as one element. Common reference numerals are used throughout the figures, where appropriate, to indicate similar features.

## DETAILED DESCRIPTION

The following description is presented by way of example to enable a person skilled in the art to make and use the invention. The present invention is not limited to the embodiments described herein and various modifications to the disclosed embodiments will be apparent to those skilled in the art.

Embodiments will now be described by way of example only.

## A. Example Processor Overview

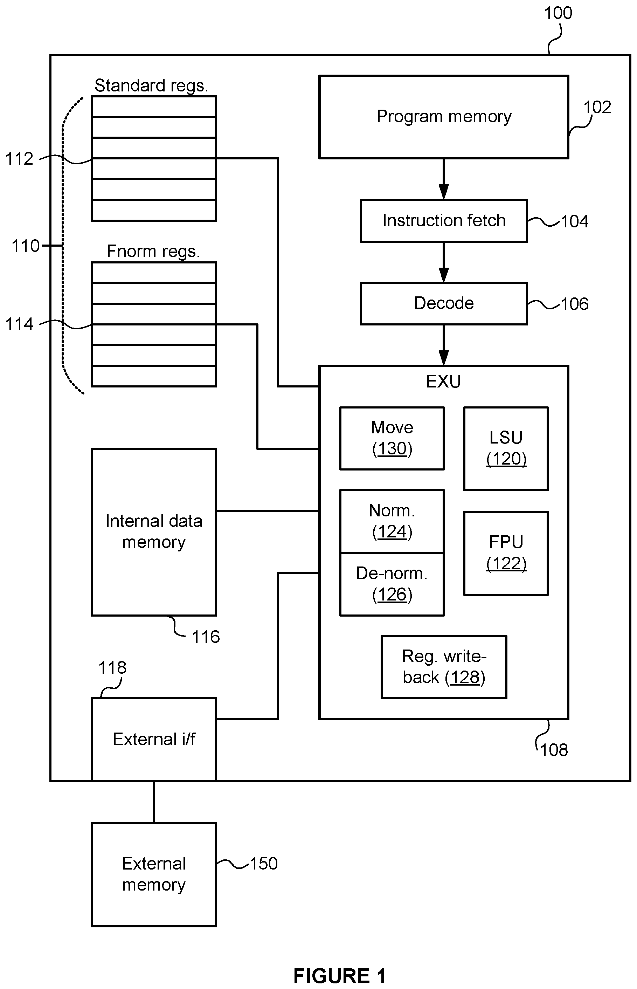

Figure 1 shows an example processor 100 in which the disclosed techniques may be implemented in accordance with embodiments of the present disclosure. The processor 100 comprises: a program memory 102, an instruction fetch stage 104, a decode stage 106, an execution unit (EXU) 108, a plurality of registers 110, a data memory 116, and an external interface (i/f) 118 for connecting to an external device 150 such as an external memory. Each of the instruction fetch stage 104, decode stage 106 and execution unit 108 is implemented in dedicated circuitry, i.e. hardware logic. Each of the program memory 102 and the data memory 116 may comprise one or more memory units employing one or more memory media, e.g. RAM, ROM or EEPROM. Further, though shown separately for schematic purposes, the program memory 102 is not necessarily implemented in a separate memory unit than the data memory 116, though it could be. The program memory 102 could be implemented in a different region of one or more of the same memory units as the data memory 116, and/or one or more different memory units.

The execution unit 108 comprises a load/store unit (LSU) 120, a floating point unit (FPU) 122, normalization logic 124, denormalization logic 126, a register write-back stage 128, and move logic 130. Each of these components is implemented in dedicated circuitry, i.e. hardware logic. The FPU 122 may comprise various constituent floating point components such as an add module, a multiplication module, a division module, a sign injection module, etc. It will be appreciated that the instruction fetch stage 104, decode stage 104 and execution unit 108 may be arranged in a pipeline, configured to execute instructions in a pipelined manner. Constituent stages of the execution unit 108 such as the LSU 120, FPU 122 and register write-back stage 128 may also be pipelined. Pipelining per se is well known in the art and need not be discussed in further detail here.

The registers 110 may be arranged in one or more register banks. They may comprise a plurality of standard-format registers 112, and/or a plurality of normalized-format registers 114. The standard-format registers 112 may be implemented in one or more register banks. The normalized-format registers 114 may be implemented in one or more register banks. The normalized-format registers 114 may be implemented in one or more of the same register banks as the standard-format registers 112 or one or more different register banks. The standard-format registers 112 may include general purpose registers and/or dedicated floating point registers. The normalized format registers 114 are preferably dedicated floating point registers but the possibility that they could also be used for other purposes is not excluded.

Each of the standard-format registers 112 (if included) is suitable for holding a value in a standardized, unnormalized format, e.g. any one or more of the IEEE 754 formats such as FP16, FP32, FP64, etc. Unnormalized for the present purposes means a format in which normal and subnormal values are represented differently, having differing interpretations for normal and subnormal (denormal) values (i.e. differing schema for how normal and subnormal values are represented within the format); whereas a normalized format is one which represents normal and subnormal values converted from an unnormalized format using the same interpretation (same schema), on a common exponential scale. The process of normalization will be discussed again in more detail later.

The width of each standard-format register 112 may be sized accordingly for the format or formats it is designed to accept. Note that in embodiments each standard-format register may be sized to accommodate multiple different possible standard formats of different widths - e.g. each could be 64 bits wide to accommodate any of FP16, FP32 and FP64 (using NaN-boxing for the formats less than 64-bits wide, as will be discussed in more detail later). Also it is not essential to the concepts disclosed herein that the unnormalized format is standardized and more generally any unnormalized format could be used, whether standardized or not. The unnormalized format or formats will be described as a standard format or standard formats in the following but it will be appreciated that this is not necessarily limiting and any reference herein to a standard format or the like could be replaced more generally with reference to an unnormalized format.

Each of the normalized-format registers 114 (if included) is for holding a value in a normalized format which may not be standardized (though the possibility that the normalized format could be standardized is not excluded).

The width of each normalized-format register 114 may be sized accordingly for the format or formats it is designed to hold. Each normalized-format register may be at least one bit wider than a corresponding standard-format register 112 in order to accommodate an exponent field of at least one extra bit, as will be discussed in more detail later. Note that in embodiments each normalized format register 114 may be sized to be able to accommodate multiple different possible normalized formats of different widths - e.g. each normalized-format register 114 may be 65 bits wide in order to accommodate any of a 65-bit normalized format converted from FP64, a 33-bit normalized format converted from FP32, and a 17-bit normalized format converted from FP16. Such normalized formats may be referred to herein as "Fnorm" formats, but it will be appreciated that this is not limiting and in general any normalized format or formats may be used, and any reference herein to Fnorm may be replaced more generally with reference to a normalized format.

As an alternative implementation (not shown), each of a set of some or all of the registers 110 may be a general-purpose register capable of holding either a standard-format value or a normalized-format value at different times. In this case the format will need to be recognizable from the bits of the value, or else some other indicator will need to be provided such as an additional one-bit flag associated with each general-purpose register to specify whether it is currently being used to hold a standard-format value or a normalized-format value. In another alternative, the registers 110 of the processor 100 may comprise only standard-format registers 112, in which case the FPU 122 will be configured to convert to the normalized format where necessary internally within the FPU. As another possibility, the registers 110 of the processor 100 (or at least those used for floating point operations) may instead comprise only normalized-format registers 114, in which case the standard format values (as they are found in memory 116/150) will always need to be automatically converted to the normalized format upon load, and automatically converted back to the standard format upon store back to memory 116/150.

In operation, the instruction fetch stage 104 fetches a series of machine code instructions from the program memory 102. The term instruction as used herein refers to machine code instructions, though this may not be stated explicitly each time. The instructions may originate from the program memory (e.g. in the case of a ROM), or may have been previously loaded into the program memory 102 from an external source or sources. The program memory 102 is shown here as an internal memory of the processor 100, but in principle the possibility of fetching instructions directly from an external memory is not excluded either.

Each instruction fetched by the instruction fetch stage 104 is passed to the decode stage 106 to be decoded, and then on to the execution unit 108 to be executed. E.g. this may be done in a pipelined manner as mentioned previously. The execution unit 108 operates on each such received instruction in accordance with the opcode of the instruction.

If the instruction is a load instruction it is executed by the LSU 120. In this case the LSU 120 loads a value from a source address specified by a source operand of the load instruction into a destination register specified by a destination operand of the load instruction. The source address may be an address in the data memory 116 or another memory mapped device, such as the external interface 118 in order to load the value from an external peripheral 150 such as external memory. The value to be loaded is found in the source location in the standardized, unnormalized format, such as one of the IEEE 754 standards (e.g. FP 16, FP32, or FP64, etc.). It may be a normal or a subnormal (denormal) value. The destination is one of the plurality of registers 110 of the processor 100. This may be one or the standardized format registers 112 or one of the normalized-format registers 114.

If an instruction to be executed is a store instruction, that is also is executed by the LSU 120. In this case the LSU 120 saves a value from a source register specified by a source operand of the store instruction into a destination memory address in the data memory 116 or other memory-mapped device, such as the external interface 118 in order to store to an external peripheral 150 such as external memory. The source register is one of the plurality of registers 110 of the processor 100. The source register may be one of the standard-format registers 112 or one of the normalized-format registers 114.

If an instruction to be executed is a floating point instruction it is operated on by the FPU 122. The floating point instruction will take at least one source operand, and may also take a destination operand. Typically the source and destination operands are register addresses in the plurality of registers 110, specifying registers from which to take the source values to be operated upon and to place the result, respectively. For example a floating point arithmetic instruction such as add, multiply or divide, takes at least two source operands and one destination operand. The FPU 120 takes the source values from the registers specified by the source operands, generates a result, and causes the result to be written back to the destination register specified by the destination operand. The result may be written back to the destination register by controlling the register write-back stage 128 to do so. Other types of floating point instruction may take only a single source operand each. For example a sign injection instruction takes a single source operand specifying a single source register. When executed, the sign injection instruction flips the sign bit of the value in the source register.

If an instruction to be executed is a move instruction it is executed by the move logic 130. A move instruction is for moving a value from one register to another among the registers 110 of the processor 100. The move instruction takes a source operand specifying a source register, and a destination operand specifying a destination register. When executed it moves the value from the specified source register to the specified destination register. The source and destination could both be standard-format registers 112, or both normalized-format registers 114, or the source could be a normalized-format register 114 and the destination could be a standard format register 112 or vice versa.

The normalization logic 124 comprises circuitry configured to convert standard-format values (or more generally unnormalized values) to a normalized format. The denormalization logic 126 comprises circuitry configured to convert normalized values back to the standard format.

Values are typically stored in memory 116/150 (and other memory mapped devices) in the standard, unnormalized format (e.g. FP16, FP32 or FP64) - i.e. encoding normal and subnormal values differently. In a first approach to the design of the processor 100, the normalization logic 124 is configured to automatically convert any value to the normalized format when it is loaded from a memory address into any of the normalized format registers 114, such that it is loaded into the register in the normalized form. Further, the denormalization logic 126 may be configured to automatically convert any value back to the standard (or more generally unnormalized) form when it is stored from any normalized-format register 114 to a memory address, such that it is stored back to the memory 116 (or other memory mapped-device) in the standard form. In such embodiments the normalization and de-normalization logic 124, 126 could be considered part of the LSU 120. In this approach, floating point instructions executed by the FPU 122 operate on normalized values taken from the registers 114 in the normalized form and write results back the registers 114 in normalized form.

8

In a second, contrasting design approach, values to be operated on by floating point instructions may be loaded into the standard-format registers 112 in the standardized, unnormalized form; and results of floating point operations are written back to the registers 112 in the standardized, unnormalized form. In this case the normalization logic 124 is configured to automatically convert the source values to the normalized format internally with in the FPU 122 when operated on by the FPU, and the denormalization logic 126 is configured to automatically convert the result back to the standardized form before being written back to the destination register. In such embodiments the normalization and de-normalization logic 124, 126 may be considered part of the FPU 122.

The processor 100 could exclusively employ either the first approach or the second approach described above. Alternatively a hybrid design is possible, wherein the processor comprises both standard-format registers 112 and normalized format registers 114 which can both be used for floating point operations. In this case if a value is loaded into one of the normalized-format registers 114 it is dealt with in accordance with the first approach; but if it is loaded into one of the standard format registers and then operated on by a floating point instruction, then it is dealt with in accordance with the second approach. Similarly if a result of a floating point instruction is written back to one of the normalized-format registers 114 and then saved to a memory address, it is dealt with in accordance with the first approach; but if a result is written to one of the normalized format registers 114 then it is dealt with in accordance with the second approach.

In embodiments the denormalization logic 126 may be configured so as, if a move instruction is executed to move a value from a normalized-format register 114 to a standard-format register 112, to automatically convert the value from the normalized format to the standard format for placement in the destination register. And/or the normalization logic 124 may be configured so as, if a move instruction is executed to move a value from a standard-format register 112 to a normalized-format register 114, to automatically convert the value from the standard format to the normalized format for placement in the destination register. In such embodiments the move logic 130 may share the normalization and/or denormalization logic 124, 126 with the LSU 120 and/or FPU 122; or may comprise its own instance of the normalization and/or denormalization logic 124, 126.

## B. Floating Point Number Formats, Normalization and Exceptional Values

### B.1. Floating Point Number Formats

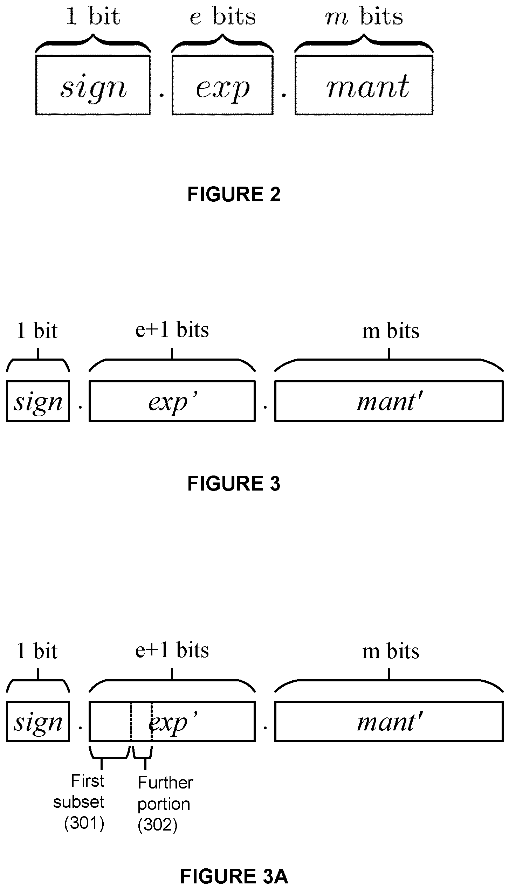

Figure 2 illustrates a conventional, unnormalized floating point number format such as used in IEEE 754 and other formats. Values in this format may be either normal or subnormal (also called denormal). For normal values, the value of the floating point number is determined by the formula:

$$value = (-1)^{sign} * 2^{(exp-bias)} * 1.mant$$

where "sign" is the sign bit; "exp" is the exponent field; "mant" is the mantissa field; and "bias" is an exponent bias which could be zero or non-zero depending on implementation, and could be fixed or programmable via a control register. The symbol "^" represents "raised to the power of", and "." represents a radix point (for binary numbers also called a binary point, or "bicimal" point, i.e. like a decimal point but for binary).

However, certain combinations of bit values can act as escape sequences, altering the interpretation of the floating point format and giving it a special interpretation other than the normal interpretation shown above. Such special values may be represented as follows.

Table 1: normal and special values of a floating point number format.

| exp | mant | Interpretation |
|---|---|---|
| 0 < exp < all 1s | Any | Normal: $(-1)^{sign} * 2^{(exp-bias)} * 1.mant$ |
| exp = 0 | 0 < mant ≤ all 1s | "Denormal" (i.e. "subnormal"): $(-1)^{sign} * 2^{(1-bias)} * 0.mant$ |
| exp=0 | mant=0 | +/-0 (Could be described as a special case of a denormal) |
| exp = all 1s | 0 | $(-1)^{sign} * infinity$ |
| exp = all 1s | mant > 0 | NaN ("not a number") (e.g. result of square root of a negative number) |

In other words if the exponent field (exp) is between zero and the maximum possible value, then the format is interpreted as a regular floating point value. However if the exponent field is zero or maximum it is treated as a special value and given a different, special interpretation. Special values may include both subnormal values and exceptional values. Exceptional values may include infinities and NaNs.

The above formula for normal values allows normal floating point values having:

- largest magnitude (MAX_MAG): exp = 111...110, mant = 111...111; and
- minimum magnitude (MIN_MAG): exp = 000...001, mant = 000...000

The special interpretations are as follows.

- If the exponent field is zero, the number is treated as a "denormal" (subnormal) number. Note that the value 0 is contained within this as the mantissa field being all zeros. This also has the strange effect of being able to represent +0 and -0, which are sometimes treated as exceptional values rather than denormal values.

- If the exponent field is all 1s then the value is treated as an exceptional value, representing a result other than a real-number.

  o Whether infinity is treated as a kind of NaN is dependent on the format. For IEEE based implementations, infinity is treated as distinct from a NaN. For the present purposes infinity and NaN will be treated as separate concepts, referred to collectively under the umbrella term "exceptional values". In some formats such as IEEE 754 infinity is distinguished from NaNs by means of the mantissa (mant) field: if mant=0, then it's +/- infinity, but if mant is non-zero, then it's a NaN (e.g. resulting from trying to take the square root of a negative number). In some implementations information on the type of NaN may also be encoded into the non-zero mantissa field value. Sometimes +/- 0 are also treated as exceptional values.

**B.2. Subnormal values**

Subnormal values are real numbers but values which are too small to be represented according to the formula for normal values. The formula $(-1)^{sign} * 2^{(exp-bias)} * 1.mant$ for a normal floating point number does not allow to represent zeros (note how the most significant/lefthand 1, i.e. leading 1, of the significand is implicit in the normal floating point formula). Nor does it allow to represent a number between 0 and MIN_MAG in magnitude. It is desirable to be able to represent the value of zero, and also numbers smaller in magnitude than the minimum magnitude (MIN_MAG) given in the normal formula by exp = 000...001, mant = 000...000. Subnormals/denormals provide for "gradual underflow", such that values remain representable for more orders of magnitude as they tend towards 0, rather than abruptly get clipped to 0 ("abrupt underflow").
Therefore to accommodate this, if the exponent field is all zeros (exp=0), the floating point format is instead interpreted according to a different formula that does not have the implicit 1 in the significand, i.e.:

$$value = (-1)^{sign} * 2^{(1-bias)} * 0.mant$$

Note that exp = 0, mant = 0 is a particular case of this that equals zero.

**B.3. Exceptional values**

Exceptional values are values that are not part of the set of Real numbers. Some operations (or attempted operations) will give results that are not real numbers, or simply do not result in a numerical values at all. For example division by zero gives infinity, or the square root of a negative number would give an imaginary value which cannot be represented in the floating point number format.
To accommodate these, if the exponent field is all 1s (i.e. exp is set to its maximum value) then the floating number format is again interpreted differently than for normal or subnormal values, and instead is taken to mean the result of the operation does not have value that can be represented numerically by the number format.
For such exceptional values, the mantissa bits are often also be used as a payload to specify something about the type of exceptional value. Most formats including IEEE 754 distinguish between infinity and other non-real results. For instance, as in IEEE 754 standards, if the mantissa field is zero as well as the exponent field being all 1s, then this is taken to represent infinity; whereas if the mantissa field is non-zero while the exponent field is all 1s, this is taken to represent a NaN (other than infinity). Note also this means there is one +/-infinity representation, but there are many ($2^{23}$-1 for F32) +/-NaN representations. Thus a type of the NaN may optionally also be encoded into the mantissa field. E.g. this could be used to distinguish canonical NaNs from non-canonical NaNs, and/or to indicate a cause of the NaN. Similarly the mantissa bits also can make the distinction between "signalling NaNs", which have the mantissa leading bit unset, and "quiet NaNs", which have the mantissa leading bit set. Signalling NaNs are intended to be input by the programmer for diagnostic purposes, whereas quiet NaNs are output by the arithmetic hardware to distinguish them from the former when exceptions occur. These notions are included in the IEEE-754 standard.

A canonical NaN is the default NaN to use if it is not desired to encode any further information. Many implementations do not care about the type of NaN but do want to differentiate between a NaN generated by an operation or just random data that happens to be a NaN and hence specify that all generated NaNs are the same "canonical" NaN. In RISC-V and other formats, canonical NaN has a mantissa field with the MSB high and the rest low.

An example of indicating a cause of the NaN would be to differentiate a generated new NaN, e.g. square root of -1, with a NaN which is passed on as a result of an operation on a previous NaN (as any operation on a NaN has a NaN as a result).

It is not strictly essential to distinguish between infinities and NaNs in all possible formats that could be devised, and instead infinities could be represented the same way as NaNs (effectively treating infinity as kind of NaN). E.g. this could be done by just using the exponent field as all 1s to represent any exceptional value and ignoring the mantissa field for exceptional values, thus treating all exceptional values the same. Some reduced-precision formats such as the FP8 E4M3 also remove infinities altogether and reserve a single, "all-ones" mantissa-exponent combination to represent NaN instead. This allows to extend the exponent range by one value in the FP8 format (one could also normalise FP8, i.e. FP8_norm, increasing the exponent width by one, and recoding this all-ones infinity into a cheaper representation). However in practice most conventional formats will use the mantissa field to distinguish at least between infinities and NaNs as distinct kinds of exceptional value, and in many cases to distinguish between different types of NaN (e.g. canonical vs. non-canonical).

## B.4. Normalization

If an operation performed by a floating point instruction (when executed by the FPU 122) combines a normal value with a subnormal value, e.g. to divide one by the other, then it may be desirable (e.g. for LUT size reduction) to normalize the normal and subnormal values into a common, normalized format that does not encode the normal and subnormal values according to different schema. Other types of operation such as addition or multiplication, etc., may also benefit from normalization when combining a normal and subnormal value, The benefits of normalizing to a common format may become even more pronounced when considering chains of operations (e.g. where it may be desirable for a multiplication to keep the values normalized for the benefit of one or more further steps in the chain).

The unnormalized number formats may be governed by a standard such as IEEE 754. However the normalized format is not currently standardized.

On a point of terminology, note again that "normal" refers to a schema within an unnormalized format whereby the significand is taken to have an implicit leading 1 that is not included explicitly in the bits of the mantissa field (i.e. significand = 1.mant), and "subnormal" (or "denormal") refers to a schema within the unnormalized format for representing small magnitude values whereby the significand does not have an implicit a leading 1. Being "normal*ized*" on the other hand refers to converting normal and subnormal values into a normalized format which uses a common schema for representing both types of value. Therefore normalized is a distinct concept from normal, and contrasting unnormalized vs. normalized formats is distinct from contrasting normal vs. subnormal values. The "normalized format" could also be referred to as an "extended exponent format", "extended range format" or "common-exponent-field format".

As one way to perform the normalization, both numbers are temporarily extended to a normalized format with a wider exponent range (at least one extra exponent bit in the exponent field). After the operation is done in the normalized space the result may be converted back to the input format (or at least conceptually the operation and conversion back may be described this way - in practice, in some cases, the conversion may be broken down into shifting the bits of the mantissa field and adjusting the exponent and merged with the rest of the operation).

Figure 3 shows an example implementation of a normalized format, which has only a single extra bit added to the exponent field compared to the corresponding standard, unnormalized format from which it is converted (e.g. IEEE format). The e bits of the normal or subnormal exponent field of the unnormalized format are re-encoded into the e+1 bits of the normalized format (there is not a one-to-one mapping between the e bits in the unnormalized format and any of the e+1 bits in the normalized format). The mantissa field may be the same size, m bits, in both the unnormalized format and the corresponding normalized format. In both Fx and Fx_norm there are m mantissa bits. For normal numbers there is a one to one mapping of mantissa field between unnormalized and normalized formats. For subnormal numbers (where the implicit MSB is 0) the leading high bits of the mantissa field are shifted left to the implicit bit position in the normalized format, and the exponent is adjusted accordingly.

For example in embodiments the unnormalized input format may be one of the standardized IEEE 754 formats such as FP16, FP32, FP64 or FP128 each having a single sign bit, an m-bit mantissa field and an e-bit exponent field as shown in Figure 2. In this case the corresponding normalized format has a single sign bit, an m-bit mantissa field and an exponent field of e+1 bits (one extra bit compared to the corresponding standard, unnormalized format). Such a normalized format may be labelled herein as an "Fnorm" format. If the unnormalized format is labelled Fx (e.g. IEEE standard FPx) where n is the bit width of the unnormalized format, then the corresponding (n+1)-bit Fnorm format may be labelled herein Fx_norm (where the additional bit is taken as read: i.e. the x in "Fx_norm" refers to the width of the corresponding unnormalized format from which it is normalized).

So for example if the input format is FP16 with m = 10 bits and e = 5 bits, the corresponding normalized format may be a 17-bit Fnorm format (F16_norm) with 10 mantissa field bits and 6 exponent field bits (and one sign bit). And if the input format is FP32 with m = 23 bits and e = 8 bits, the corresponding normalized format may be a 33-bit Fnorm format (F32_norm) with 23 mantissa field bits and 9 exponent field bits (and one sign bit). And if the input format is FP64 with m = 52 bits and e = 11 bits, the corresponding normalized format may be a 65-bit Fnorm format (F64_norm) with 52 mantissa field bits and 12 exponent field bits (and one sign bit).

In the case of a normalized format of the form shown in Figure 3, the formula for the normalized value is (following the convention of using a ' symbol to indicate a normalised entity):

$$\text{value (normalized)} = (-1)^{sign} * 2^{(exp'-bias')} * 1.mant'$$

(note also that this no longer includes a way to represent zero, which therefore makes +/-0 "exceptional" values). In embodiments the bias of the normalized format (bias') may stay the same as in the unnormalized format (i.e. bias' = bias), or may be different (bias' ≠ bias). There is freedom for the designer in his respect. In the case where bias' = bias, one would need to allow negative biased exponent values, moving from the conventionally unsigned format to a signed (and biased) exponent form, but with the 2's-complement assumed here that doesn't make much difference.

The normalized format enables operations to combine normal and subnormal values, such as to add, multiply or divide. E.g. if an FP16 normal number and an FP16 subnormal number are to be multiplied together, then they each get converted to a 17 bit "Fnorm" format for the purpose of the multiplication, and then the result may later be converted back to FP16 as an output.

Note: while the normalized format does not intrinsically have the concept of normal and subnormal values (in the normalized format they are both represented on the same scale according to the same schema), nonetheless the two values to be operated upon may be referred to herein as subnormal and normal values even after conversion to the normalized format, in the sense that they have originated from normal and subnormal values in the unnormalized input format.

The conversion (re-encoding) from unnormalized format to normalized format (F to F_norm) comprises shifting the mantissa and adjusting the exponent. Specifically, re-encoding a subnormal (denormal) unnormalized value to a normalized value comprises:

- first detect whether the value in question is a normal or denormal number (by checking whether the exponent is zero); then
- if it is subnormal (denormal), do a leading zero count on the bits in the mantissa field mant;
- then shift the bits of the mantissa field left by an amount equal to the leading zero count (LZC ) plus one, i.e. mant' = mant << (LZC+1) (the additional shift of one is because the MSB after shifting by the LZC is now high and will become the implicit high bit of the mantissa, so that is shifted out as well and the rest is the mantissa); and
- adjust (subtract from) the exponent field by an amount equal to the difference in the biases of the normalized and unnormalized format minus the shift in the mantissa, i.e. exp' = (bias'-bias)-shift, where shift = LZC+1. To elaborate on this last step, exp is 0 for a denormal (subnormal), which means the exponent is to be interpreted as 1-bias, and so exp' is re-biased to 1+(bias'-bias), which is then corrected to 1+(bias'-bias)-(1+shift) = (bias'-bias)-shift.

And re-encoding a normal unnormalized value to a normalized value comprises:

- if the bias is not changed, then the re-encoding is just appending a zero MSB (most significant bit) to the exponent field, i.e. exp' = {0, exp} where { ..., ...} represents a concatenation (in Verilog notation). If the bias is different then exp' = exp + (bias'-bias). Typically, if following the IEEE bias method, this difference only changes the top two bits of the exponent as described elsewhere herein, and is thus simple to implement. E.g. for an 8-bit exponent with bias 127 to a 9-bit F_norm exponent with bias' 255, the difference is 128 which means only bit 8 and 9 are changed and so only a single half adder is needed. In this case, as the mantissa stays the same for normal values the whole re-encoding consists of a single half adder for those.

De-normalizing back to the unnormalized format (F_norm to F) comprises, for a subnormal value:

- check that the value in the exponent field exp' (in the normalized Fx_norm format) is smaller than 1-bias (of the unnormalized Fx format) (because an exponent of less than 1-bias in the normalized format is a subnormal in the unnormalized format);
- if it is, then the exponent in the normal form is exp = exp' - bias'. The mantissa also needs to be shifted right by an amount A, i.e. mant = 1.mant' >> |A|, where A = (-bias + 1) - (exp' - bias'), which simplifies to A = 1-bias+bias'-exp' when the biases are different, or simply A = 1-exp' when biases are the same (in other words the shift in the mantissa is equal to the exponent in the normalised form adjusted to the bias of the unnormalized form, which is a negative number meaning a right shift, and the additional shift of 1 is because for the denorm correction); and

- set the exponent bits of the normalized exponent field exp' to all zeros (i.e. exponent = - bias).

And de-normalizing normalized value back to a normal in the unnormalized format comprises:

- if the bias is not different, just removing the MSB from the exponent field. If the bias is different then exp = exp' - (bias'-bias), and the zero msb is dropped. I.e. exp' is now larger than 1-bias, so it is in range of the unnormalised format and just needs its bias adjusted. And the mantissa does not need to be adjusted, and the exponent needs a subtraction of (bias'-bias). If they are the same, then the exponent's msb is simply dropped, otherwise like above typically only need a single half subtractor is needed.

A more detailed mathematical breakdown of a procedure for normalizing and denormalizing normal and subnormal values is given below. If the FPU 122 supports operations which combine values of different precision (e.g. an instruction which operates on one single precision value and one double precision value), then each value would simply be normalized according to its own format. E.g. the FP32 would be normalized to 33-bit Fnorm (F32_norm) and the FP64 would be normalized to 65-bit Fnorm (F64_norm), and the operation performed on the two different precision Fnorm values.

Exceptional values such as NaNs and infinities may also be represented in the Fnorm format or other such normalized format. The straightforward way to do this would be to still use all 1s in the exponent field to indicate an exceptional value, as in the corresponding unnormalized format. However, as will be discussed in more detail shortly in section C, the present disclosure recognizes a more efficient encoding.

### B.4.1 Normalizing

Assuming a floating point number *f* in denormalized IEEE754 *F.s.e.m*, e.g. single precision F32 is *F1.8.23*, then its normalized form f' is given as follows.

$$\mathrm{normalize}((f)_{Fs.e.m}) \quad = (f')_{Fs.e.m_{\mathrm{norm}}}$$

where

$$sign \quad = f[(s + e + m - 1){:}(e + m)]$$

$$exp \quad = f[(e + m - 1){:}m]$$

$$mant \quad = f[(m - 1){:}0]$$

$$bias \quad = 2^{e-1} - 1$$

$$x \quad = (-1)^{sign} \cdot 2^{exp-bias} \cdot 1.mant$$

and

$$sign' \quad = \begin{cases} 0 & \text{if } x \geq 0 \\ 1 & \text{if } x < 0 \end{cases}$$

$$exp' \quad = \begin{cases} 0 & \text{if } x < 2^{-(2^{e-1}-1)-m} \\ 2^e - 1 & \text{if } x \geq 2^{2^{e-1}} \\ \lfloor \log_2 |x| \rfloor + bias' & \text{otherwise} \end{cases}$$

$$mant' = \begin{cases} 0 & \text{if } x < 2^{-(2^{e-1}-1)-m} \\ 0 & \text{if } x \geq 2^{2^{e-1}} \\ |x| \cdot 2^{-(exp'-bias')+m} & \text{otherwise} \end{cases}$$

$$bias' = 2^{e+1-1} - 1$$

$$x' = (-1)^{\text{sign'}} \cdot 2^{exp'-bias'} \cdot 1.mant'$$

$$f'[(s+e+1+m-1):(e+1+m)] = sign'$$

$$f'[(e+1+m-1):m] = exp'$$

$$f'[(m-1):0] = mant'[(m-1):0]$$

which can be optimized to

$$sign' = sign$$

$$exp' = \begin{cases} 0 & \text{if } exp = 0 \wedge mant = 0 \\ (1 - bias) + bias' - (1 + \text{lzc}(mant)) & \text{if } exp = 0 \wedge mant \neq 0 \\ (exp - bias) + bias' & \text{if } exp \neq 0 \end{cases}$$

$$mant' = \begin{cases} (mant \cdot 2^{1+lzc(mant)})[(m-1):0] & \text{if } exp = 0 \wedge mant \neq 0 \\ mant & \text{if } exp \neq 0 \vee mant = 0 \end{cases}$$

Note that *[i:j]* indicates bit-vector slicing for element *i* down to *j* inclusive, *lzc()* is the leading zero count function, and that *x'* equals x. Also note that the bias could be different in the general case.

**B.4.2 Denormalizing**

Similarly for denormalizing with *f'* in normalized form *Fs. e. $m_{\text{norm}}$* and *f* in denormalized IEEE754 format *Fs. e. m* we have:

$$\text{denormalize}((f')_{Fs.e.m_{\text{norm}}}) = (f)_{Fs.e.m}$$

where

$$sign' = f[(s+e+1+m-1):(e+1+m)]$$

$$exp' = f[(e+1+m-1):m]$$

$$mant' = f[(m-1):0]$$

$$bias' = 2^{e+1-1} - 1$$

$$x' = (-1)^{\text{sign'}} \cdot 2^{exp'-bias'} \cdot 1.mant'$$

and

$$sign \quad = \begin{cases} 0 & \text{if } x' \geq 0 \\ 1 & \text{if } x' < 0 \end{cases}$$

$$exp \quad = \begin{cases} 0 & \text{if } x' < 2^{-(2^{e-1}-1)} \\ 2^e - 1 & \text{if } x' \geq 2^{2^{e-1}} \\ \lfloor \log_2 |x'| \rfloor + bias & \text{otherwise} \end{cases}$$

$$mant \quad = \begin{cases} 0 & \text{if } x' < 2^{-(2^{e-1}-1)-m} \\ 0 & \text{if } x \geq 2^{2^{e-1}} \\ |x'| \cdot 2^{-(exp'-bias')+1} & \text{if } 2^{-(2^{e-1}-1)-m} \leq x' < 2^{-(2^{e-1}-1)} \\ |x'| \cdot 2^{-(exp'-bias')+m} & \text{otherwise} \end{cases}$$

$$bias \quad = 2^{e-1} - 1$$

$$f[(s + e + m - 1):(e + m)] \quad = sign$$

$$f[(e + m - 1):m] \quad = exp$$

$$f[(m - 1):0] \quad = mant[(m - 1):0]$$

which can be optimized to

$$sign \quad = sign'$$

$$exp \quad = \begin{cases} 0 & \text{if } exp' = 0 \wedge mant' = 0 \\ 0 & \text{if } -(2^{e-1} - 1) - m < exp' - bias' \leq -(2^{e-1} - 1) \\ exp' + (bias - bias') & \text{otherwise} \end{cases}$$

$$mant \quad = \begin{cases} (1.\,mant' \cdot 2^{((exp'-bias')+bias+1)})[(m - 1):0] & \text{if } -(2^{e-1} - 1) - m < exp' - bias' \leq -(2^{e-1} - 1) \\ mant' & \text{otherwise} \end{cases}$$

$$x \quad = (-1)^{sign} \cdot 2^{exp-bias} \cdot 1.\,mant$$

where *f'* is exactly representable in *f*.

### B.5. Implementing the Normalization

Conventionally the normalization and de-normalization is all done internally within the floating point unit (FPU) 122 as part of the floating point operation (via the normalization and denormalization logic 124, 126, which may be part of the FPU 122). In this case the normalized format is never used in the floating point registers, which comprise only standard format register 112. Values are loaded into the registers 112 in the standard, unnormalized form (e.g. IEEE format). The FPU 122 operates on the values from the standard-format registers 112 and converts internally to a normalized format. Any value output back to a register is then always in the original, unnormalized input format (or one of the input formats), e.g. a conventional IEEE format such as FP16, 32 or 64, etc. Hence the normalized format is invisible to software. This is the first approach described earlier in section A.

In other words the FPU 122 is operable to interpret the operand value in each of the plurality of registers 112 according to either a normal format or a sub-normal format, wherein each of the normal and subnormal formats comprises a mantissa field of m bits of the respective sequence of bits and an exponent field of e bits of the respective sequence of bits but the normal format applies an implicit leading 1 to the significand wherein the subnormal format does not. The FPU 122 is configured so as when performing an operation combining a normal value in the first format from one of said plurality of registers with a subnormal operand value in the subnormal format from another of said plurality registers, to re-encode each of the normal and sub-normal values internally within the FPU 122 into a respective normalized value in a common normalized format comprising at least one extra exponent bit (e+1 exponent bits), as well as typically the same number m of mantissa bits (and the sign bit assuming signed). The FPU then performs the operation and converts the result back to the first format (which in practice may mean the conversion being fused with the operation), and the result is written back to a destination register 112 in the first format.

In an alternative implementation however, values may actually be held in the floating point registers in the normalized format. In this case values may never be held in the any of the registers 110 used for floating point operations in the unnormalized format (only in memory or other memory mapped devices), and the floating point registers may comprise only normalized format registers 114. E.g. for FP64 values each floating point register 114 may be a 65-bit wide register for holding the values in the normalized form including the extra bit. However any store operation that moves a result back to memory would convert form the 65-bit Fnorm format ("F64_norm") back to the conventional 64-bit FP64 format. Hence in memory the software still only sees the unnormalized format. This is the second approach discussed earlier in section A.

In such embodiments, the normalization logic 124 is configured such that when any load operation is performed by the LSU 120 to load a value from memory 116 (or other memory mapped location) into a floating point register 114, the value is automatically converted in hardware into the normalized (e.g. Fnorm) format for placement into the destination register 114. Vice versa, the de-normalization logic 126 is configured such that for any store operation performed by the LSU 120 to store a result back to memory, the result is automatically converted in hardware back into the conventional, unnormalized (e.g. IEEE) format for placement in the destination memory address. There may also be moves performed by the move logic 130 to move values between the normalized-format floating point registers 114 and other register such as standard-format registers 112 or general purpose registers. In this case the normalization logic 124 is configured to automatically convert any value from unnormalized to normalized form when moved from a non-normalized format register to a normalized format register 114, and vice versa the de-normalization logic 126 is configured to convert any value from normalized to unnormalized form when moved from a normalized format register to a non-normalized format register. The normalization and de-normalization logic 124, 126 may be shared between the LSU 120 and the move logic 130, or each of the LSU 120 and the move logic 130 may comprise its own instance of the normalization and de-normalization logic 124, 126.

Having the extra bit of the normalized/Fnorm format included in the registers of the register file 110 simplifies the implementation, since it is not necessary to keep converting back and forth between unnormalized and normalized formats in a chain of operations operating on register values. Instead the conversion back to the unnormalized format (e.g. FP64) only needs to be done when the final result of the chain is stored back to memory.

A hybrid design would also be possible comprising some standard-format floating point registers 112 and some normalized-format floating point registers 114. And/or a design could allow both normalized and unnormalized values to be stored in the same register on different occasions, assuming some means is provided (such as an additional 1-bit flag) to distinguish between which type of value is currently held in a given register.

In embodiments the normalized format is always invisible to software, whichever of the two implementations above is used, because e.g. the RISC-V ISA (and others) are defined to operate on IEEE754 values and hence instructions must always "see" that encoding as CPU state.

## B.6. NaN-Boxing

Typically it will be desired that different precision values can be held in a given one of the registers 110 on different occasions. E.g. in the standard-format registers 112, a 64-bit register may sometimes be used to store a 64-bit (double precision) value and sometimes a 32-bit (single precision) value, etc. Or in the normalized format registers 114, it may be desired that a 65-bit register can sometimes hold a 65-bit Fnorm ("F64_norm") value and sometimes hold a 33-bit Fnorm ("F32_norm") value, etc.

One way to support this is, when a floating point number is held in a register of a certain width in a format of a narrower width than that of the register, then the value is right-aligned (stored in the least significant position) and the unused left-most (most-significant, i.e. leading) bits are all set to one. E.g. if a 32-bit FP number is stored in a 64-bit register (or a 33-bit "F32_norm" number is stored in a 65-bit register), then the actual value is placed in bottom 32 bits, and the top 32-bits are all set to 1. This setting of the unused MSBs to 1 is called "NaN boxing". It is done automatically by hardware of the processor 100 when a narrower-format value is placed in a wider register, whether by a load from a memory address or a move from another register, or when generating a narrower value to be placed in a register (e.g. an add or multiply on narrower values).

In other words, whenever a smaller width number format is used in a register where a wider number format can also be used, it is 'NaN-boxed', meaning it is right aligned and the additional more significant bits are set high. NaN-boxing is introduced in the RISC-V ISA, but the same idea could also work in other schemes, e.g. zero- or sign-extending. The term NaN-Boxing as used herein does not limit to any specific instruction set architecture (ISA), and more generally can refer to concept of right aligning the narrower value and padding the MSBs of the wider register.

NaN-boxing ensures that the narrower number represents a NaN in the wider format. This means that in turn, if the NaN-boxed value is then operated on by an instruction of a wider format, the result of that instruction will also be a NaN in the wider format.

Note that each type of floating point instruction in the instruction set will be defined to expect source values of specific formats with specific widths (and to provide a result in a specific format) - e.g. if the processor 100 supports FP32 and FP64 then the instruction set may include both: i) a 32-bit multiply instruction type which takes two FP32s (or 33-bit F32_norms) as its source values (multiplier and multiplicand), and outputs a result in FP32 (or 33-bit F32_norm); and ii) a separate 64-bit multiply instruction type (with a different opcode than the 32-bit variant) which takes two FP64s (or 65-bit F64_norm) as its multiplier and multiplicand, and outputs a result in FP64 (or 65-bit F64_norm). Mixed precision operations are possible in some processors but each input value is still expected to conform to a specific respective format. E.g. if a mixed-precision multiply instruction type is provided which multiples an 32-bit multiplier with a 64-bit multiplicand, then the first input has to be 32 bits wide and the second input has to be 64 bits wide to generate a valid numerical result.

RISC standards specify that if an instruction attempts to operate on a value of the wrong width for the instruction type (e.g. due to an error by the programmer), then the result should be a NaN. NaN boxing ensures that this happens.

E.g. say that due to an error in the software by the programmer, a 64-bit FP arithmetic instruction tries to operate on a 32-bit value. RISC specifies that the 32-bit value is NaN-boxed, and that the result of arithmetic instructions on a source NaN is another NaN. Thus the result of the 64-bit arithmetic instruction on the 32-bit NaN-boxed value will be a NaN. Because the 32-bit value is NaN boxed, then it looks like a NaN anyway to a 64-bit operation (remember that a NaN is represented by the exponent bits all being set to 1). And since RISC also specifies that any operation on a NaN should also result in a NaN, then this automatically gives the correct specified result (i.e. NaN).

Further, if a 32-bit operation tries to operate on a 64-bit value, then the fact that the top 32 bits are not all 1s indicates that something has gone wrong. The FPU 122 is configured to check the top 32 bits are all 1s whenever it does a 32-bit operation (and similarly for other widths), and if they are not all ones the operation's result will be a NaN (in F32 so also NaN-boxed).

NaN boxing and normalization can be combined. E.g. for a 64-bit register holding a 32-bit NaN-boxed value, the 33 LSB hold the 33-bit F32_norm format version of the number (normalized 32-bit SP value), and the 32 MSB are all 1s (the NaN boxing).

As will be discussing in more detail later, in embodiments the presently disclosed scheme of encoding exceptional values can also be exploited to incorporate and optimise NaN-boxing.

## C. Encoding Exceptional Values in a Normalized Format

As mentioned earlier, conventionally in an unnormalized format such as FP16, FP32 and FP64 etc., an exceptional value (e.g. infinity or NaN) is indicated by setting all the exponent field bits to 1. This same encoding of exceptional values could simply be transferred over to a normalized format as well. However this is inefficient and it is recognized herein that normalized formats present an opportunity for a more efficient encoding of exceptional values. The renormalized format provides some extra encoding space which enables a different encoding of exceptional values.

Particularly, the normalized format adds an extra bit to the exponent field compared to the unnormalized format (see again Figure 3 in comparison with Figure 2). Adding an extra bit to the exponent field doubles the range of the exponent field. However, it is recognized herein that the full extent of the extended range of the exponent field of the normalized format is not all needed for the encoding of the re-encoded exponents of the normalized numerical values. Actually, the normalized format only needs an extra range of exponent values equal to the number of mantissa field bits of the normalized, input format in order to encode the new normalized exponents of both values in the normalized format. The reason is that in order to re-encode, the subnormal significand is changed from 0.mant to 1.mant by multiplying the mantissa field by a power of two (shifting left, $2^{shift}$) and adjusting the exponent (subtracting shift from exp). Since the shift will be a maximum of m (mantissa) portions, this will only require subtracting up to m from exp (and m is very likely to be much smaller than the range extension of exp in the normalized format).

Another way of looking at it is that when an IEEE F32 (F1.8.23) number is converted to a F1.9.23 number (for example), there are a lot of values within the range of F1.9.23 that will never occur, so one can slightly adapt the format (to non-IEEE compliant) and make use of that.

Hence according to the present disclosure, an otherwise-unused subrange comprising one or more exponent-bit combinations within the extended exponent range of the normalized format (being otherwise unused for expressing any possible non-exceptional numerical value) may be used to represent one or more possible exceptional values. Embodiments may also use the unused range to encode, into the exponent field of the normalized format, information about the nature of the exceptional value, e.g. whether it is an infinity or NaN, and/or a type of NaN such as whether it is a NaN-boxed NaN.

This encoding is more efficient than the conventional approach of encoding the fact of being an exceptional value into the exponent field and encoding the type of exceptional value into the mantissa field, as the disclosed encoding requires inspecting fewer bits to detect than the conventional encoding. Conventionally the FPU has to check that all the bits of the exponent field are 1, and then check further bits of the mantissa field to detect the type of exceptional value. But with the special normalized (e.g. Fnorm) encoding, it is possible to use a special sub-range within the extra range afforded by the normalized exponent in order to indicate an exceptional value using fewer bits, and in embodiments also encode information about the nature of the exceptional value.

An example is shown in Figure 3A.

The maximum value of the exponent field exp in the unnormalized format (for an actual numerical value) is all 1s except the LSB. So for FP32 for example (e=8 bits), that would be exp = 11111110. Since the additional range of the exponent field (exp') needed to express numerical values in the normalized format (with 9 exponent bits) is only slightly greater, this means that only some exponent field values in the extended range (will be used to express possible numerical values in the normalized format, but other exponent field values in the extended range ( will never be used to express numerical values in the normalized format.

For example, for F32, the maximum exponent is 127, encoded as 11111110 with bias 127 in the 8 exponent bits. The range is extended on the lower end (since the normalization comprises subtracting from exp). So if the range is extended to 9 bits and the normalized format is re-biased with 255, then the maximum exponent value used to express an actual exponent becomes 101111110 which effectively means the two top bits can never be both high. (For the minimum exponent -126 the top two bits can also not both be zero, but when including the subnormals it can). In other words if re-biased, 00000001 becomes 010000001 (i.e. add 128 because the new bias is 255 and the old was 127), and it will extend in range down to 010000000, 001111111, etc. Thus with re-biasing, the largest exponent value then becomes 011111110'b+128=101111110, hence the top two bits will never be both high (11) for normalised numerical values (where the 'b is Verilog notation). Alternatively if the normalized format is not re-biased compared to the unnormalized format (bias'=bias), then 00000001 as smallest exp' would extend in bits to 000000001 (e+1=9 so an additional zero) and then extend in range to 000000000, 111111111 (-1 in 2's complement), 111111110, etc. In this case the top two bits would never be 10 if the normalized format is not re-biased, and it is assumed the mantissa isn't big enough to extend the exp' to there.

Therefore as shown in Figure 3A, a subset of the two or more of the most significant (left-most) bits of the exponent field exp' of the normalized format may be used to represent one or more possible exceptional values. For example, a first subset 301 of at least the two most significant bits (but fewer than e bits) of the exponent field exp' of the normalized format may be used to encode whether or not the current value expressed by the normalized value is an exceptional value - i.e. the fact of being an exceptional value. As explained in the preceding paragraph, if at least the top two MSBs are 1, this combination can never occur in the normalized format for expressing actual numerical values. Therefore if a first subset 301 of the two most significant bits are both 1s, this may be taken to represent the fact of being an exceptional value.

Thus by using a different encoding than in the unnormalized format, the FPU 122 can avoid having to check that all exponent field bits are high in order to detect an exceptional value. Instead, to detect presence of an exceptional value, the FPU 122 is configured to only read a subset of the bits of the exponent field to detect a bit combination not occurring within the range of exponents used to express any non-exceptional numerical values. In embodiments this is the first subset 301 and the check is to detect that both MSBs are 1. However it is not excluded that other unused sub-ranges could be found for this purpose within the extended exponent range of the normalized format.

In embodiments, as well as detecting the mere fact of whether or not a value is exceptional, it may also be desired to encode one or more pieces of information about a type of the exceptional value. Once it is determined that the first subset 301 comprises a combination of bit-values that does not occur in any possible numerical values (e.g. the two MSB of the exponent field are both 1), then any further combination of one or more bit values of one or more further bits 302 of the exponent field exp' in combination with the first subset 301 must also be available to use for other purposes. Hence in embodiments, a further portion 302 of the exponent field exp' of the normalized format may be used to encode one or more pieces of information about a type of the current exceptional value. The further portion 302 may be exclusive of the first portion 301 and comprises one or more bits, e.g. the one or more next-most significant bits after the first portion 301. Preferably the first subset 301 and further portion 302 together are still fewer bits than the e+1 bits of the extended exponent field of the normalized format, and may be fewer than the e bits of the original, unnormalized format.

The further portion 302 may comprise one bit used to indicate whether the exceptional value is an infinity or a NaN. Alternatively or additionally, the further portion 302 may comprise one or more bits indicating a type of the NaN (e.g. whether a signalling NaN or non-signalling NaN or whether a canonical or non-canonical NaN) and/or a cause of the NaN (e.g. square root of a negative number, etc.), or whether the NaN is a Nan-boxed NaN. For example in embodiments the further portion may comprise at least two bits following the first portion (e.g. the next two or more most-significant bits): one bit to indicate whether the exceptional value is an infinity or NaN, and one or more bits to indicate a type of the NaN if it is a NaN.

In a conventional unnormalized format such as the IEEE 754 formats, the fact of being an exceptional value is encoded by the exponent field being all 1s, and the type of exceptional value is encoded into the mantissa field. In this case the FPU 122 has to read all the exponent bits and one or more mantissa bits to detect an exceptional value of a particular type. In fact in the conventional case, the FPU 122 has to check that all mantissa field bits are zero to determine when it is an infinity, and would have to check multiple mantissa bits that fall into the NaN-boxing top bits to determine whether it is NaN-boxed or not. So for F64, that's 32-11-1=20 mantissa field bits to check for NaN-boxing and 32 more for infinity/NaN/zero.

According to embodiments disclosed herein on the other hand, by encoding the type differently, the FPU 122 can detect the type (e.g. inf vs. NaN) from only the exponent field without checking the mantissa field and preferably without checking all e+1 exponent field bits, and in embodiments by checking e bits or fewer.

For instance the FPU 122 may only be required to check that the top two MSB of the exponent field are 1 to determine whether the value in question is an exceptional value, then the next-most significant bit to tell whether it is an infinity or NaN, and then (in one possible implementation) the next one or more most significant bits to check the type of NaN.

Embodiments preferably also include +/-0 in this encoding, as zero is now no longer part of subnormals, so otherwise it would be required to separately check that all bits are zero (exp' and mant') to know the value is zero.

More generally, it is identified herein that the bits of exp' below the top two being high are usable for any encoding the designer wishes (preferably as long as it includes INF/NaN from Fx). E.g. for F32_norm's 9 exponent bits, there are 7 bits available after the two MSB (301) used to indicate the fact of being an exceptional value, giving a range of $2^7$ for encoding further information. To encode NaN-boxed, NaN, Inf, and potentially zero, only requires two further bits, so only four bits need to be read to determine the exceptional value from this set instead of all 32 in F32, and another 5 bits are available to optionally encode yet further information. Therefore there are another 5 bits available in the exponent (range of $2^5$) for encoding yet further information, if desired, such as a cause of the NaN.

As discussed in more detail below, in the case of a NaN, one piece of information that may be desirable to encode is the fact that the current NaN is a NaN-boxed NaN. As recognized herein, this is useful because by using a different encoding for NaN-boxed NaNs one can avoid having to check whether all the NaN-boxing bits are high. As discussed earlier, if infinity and NaN are encoded differently than one another, then the FPU 122 can detect them without checking all exponent bits assuming it is executing an instruction intended for the correct width of source value (e.g. a single precision floating point instruction operating on an F32_norm source value). However if NaN-boxing is not encoded in a unique way, then an FPU attempting to execute a wider-format floating point instruction would still need to check a relatively large number of the NaN-boxing bits in order to check that it is not attempting to operate on a narrower format-value (which according to the principle of NaN-boxing - see earlier - should be detected as a NaN in the wider format and hence result in a NaN as the output of the operation). However, by instead encoding a special indication that the current NaN is a NaN-boxed NaN in the exponent field, the number of bits to check can be reduced, and a NaN-boxed narrower-format value can be detected by inspecting only the first subset 301 and further portion 302 of the exponent field exp' of the higher-width format. This is discussed in more detail in the following subsection.

## C.1. Normalising and NaN-boxing

The RISC-V specification allows for using a normalized floating point format (which we call Fnorm) where subnormal numbers are stored normalized internally within the FPU. This recoding must be indistinguishable in functionality compared to when one wouldn't use the recoded format. In addition, RISC-V requires the use of NaN-boxing where a narrower floating point format is represented as a NaN when interpreted in a wider floating point format by setting all more significant bits to 1. To be compliant with RISC-V, the Fnorm format in combination with NaN-boxing should also still support NaNs, infinities and zeros (exceptional numbers in floating point). Embodiments disclosed herein can achieve this by making use of the invalid/unused encoding space in the Fnorm format, which becomes complicated in combination with mixed floating points widths.

Embodiments disclosed herein change the encoding of NaNs and INFs, as discussed earlier. Alternatively or additionally, the encoding may also be used to differentiate between NaNs for NaN-boxing and regular NaNs, to be able to encode everything in the Fnorm bits (which has some unused encoding space). Specifically, when a narrower value is held in a wider format register in NaN-boxed form, thus representing a NaN in the wider format, then according to embodiments disclosed herein, the fact that this is a NaN-boxed NaN (as opposed to another type of NaN) can be encoded into the exponent field of the wider format. Note therefore more generally than padding the unused MSB with all 1s as in the conventional case, NaN-boxing may be defined herein as any scheme placing a narrower-format value in a wider-format register by right-aligning the narrower-format value in the register and padding some or all of the remaining, more significant bits in any way that will cause the floating point logic to recognize the content of the register as a NaN in the wider format.

This different encoding allows to detect whether the number is a NaN-boxed narrower floating point number or was originally already a NaN in the wider floating point format. This information would otherwise require a relatively large number of bits to be analysed in order to detect. The disclosed encoding be exploited in order to require fewer bits to be checked in order to detect a NaN, and to detect a NaN as being a NaN-boxed NaN.

To elaborate by way of example, if the FPU supports only a single number format, e.g. F extension (F32) only, then this is all there is to it. When further wider or narrower formats are also supported, e.g. extensions F and D (F32 and F64), this becomes more complicated. It is now typically necessary to distinguish the number format indicated by the operation, e.g. FADD.S for F32 or FADD.W for F64, and the number format stored in the FPRs (floating point registers) used which could be F32_norm or F64_norm. If the FPRs are wider than the instruction number format, the source operands should be a NaN-boxed version of the narrower format, e.g. if the operations work on F32 values and the FPR is 64-bit, the data in the FPR should be a NaN-boxed F32. A NaN-boxed value has all additional more-significant bits asserted, i.e. bits [63:32] in the previous example. This means such a NaN-boxed F32 will be a NaN in the wider format (F64).

There is no point in normalising the exponent of the NaN in the wider format of a NaN-boxed value - i.e. the value is a NaN so it doesn't need to be normalised. So instead, embodiments may normalise the narrower format (Fn) and then NaN-box the resulting Fn_norm. If we have an operation on the narrower format, the value is now properly normalized, and if we have an operation on the wider format it is still a NaN.

Since we either only use the lower bits of a properly NaN-boxed value or we treat it as a NaN, we don't have to interpret the number format further. This functions in the same way for normalized values, e.g. either use the lower 33-bits in case of a properly NaN-boxed F32_norm or treat it as a NaN in F64_norm.

Because the normalized format has additional encoding space for unused number representation, it can be used to optimise how to store NaN-boxed values. By assigning an exponent range to represent NaN-boxed, the number of bits to check can be reduced. E.g. if the top two exponent bits are high in Fx_norm, it is outside of the regular exponent range, hence this can indicate NaN, with a third bit differentiating between NaN-boxed and regular NaN, avoiding the need to check the remaining exponent bits. So bits [63:61] allows to derive whether it's a NaN-boxed F64_norm, after which bits [31:29] can be checked to derive whether it's a NaN-boxed F32_norm.

To elaborate, in the source, unnormalized format, INF and NaN have the exponent all high and the mantissa zero or not. If INF and NaN are encoded as discussed earlier, then that information is present in the normalized format as well, but not necessarily which type of NaN. A NaN-boxed value is a subset of NaNs in the wider format, with a number of MSBs of the mantissa field high, e.g. F32 has 7 mantissa bits in the top 16bits. Therefore once it is known the value is a NaN, then without any further special encoding of the type of NaN, it would be necessary to check all those top 7 bits in order to know that it's a NaN-boxing NaN. In other words, to detect a NaN as being a NaN-boxed NaN, it would be necessary to check all the bits in the overlap between the NaN-boxing bits and the mantissa field of the wider normalized format. In contrast, by encoding a NaN-boxed value as a separate encoding according to embodiments herein, the need to check this many bits to detect NaN-boxing can be avoided. Consider for example a 65-bit-string. By checking the top 3 exponent bits it can be known if it is a F64_norm regular value, an F64_norm exceptional value (INF/NaN/zero), or a NaN-boxed narrower value. This could then be repeated for the lowest 33-bits to differentiate whether it is a F32_norm or F16_norm, for example. This works because for a 65-bit value it is either a NaN-boxed narrower value or it is a F64_norm and nothing else.

## D. Further Remarks

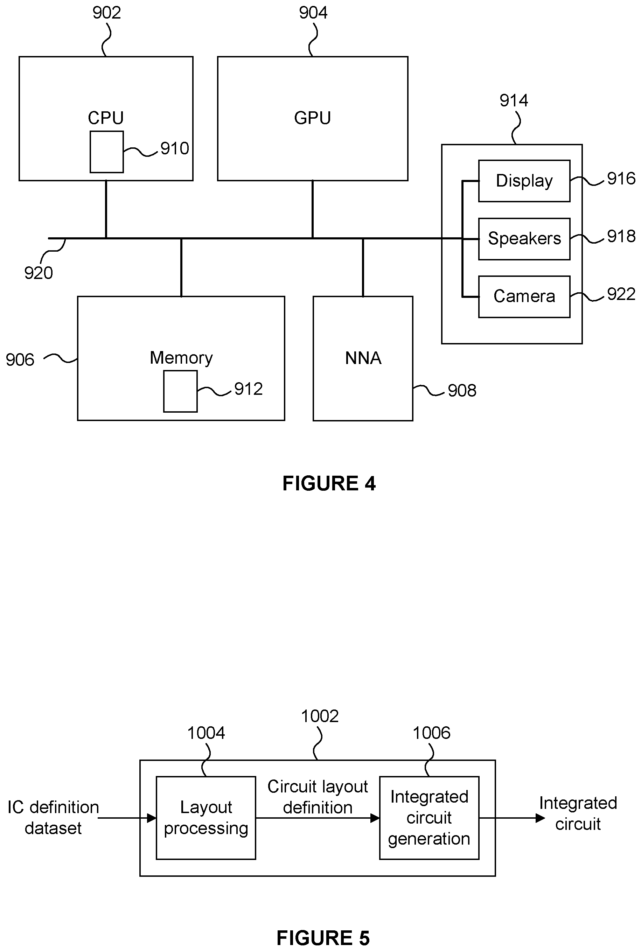

Figure 4 shows a computer system in which processing systems described herein may be implemented. The computer system comprises a CPU 902, a GPU 904, a memory 906, a neural network accelerator (NNA) 908 and other devices 914, such as a display 916, speakers 918 and a camera 922. A processing block 910 (corresponding to processing block 150) is implemented on the CPU 902. In other examples, one or more of the depicted components may be omitted from the system, and/or the processing block 910 may be implemented on the GPU 904 or within the NNA 908. The components of the computer system can communicate with each other via a communications bus 920.

The processor and computing system of Figures 1 to 4 are shown as comprising a number of functional blocks. This is schematic only and is not intended to define a strict division between different logic elements of such entities. Each functional block may be provided in any suitable manner. It is to be understood that intermediate values described herein as being formed by a processor need not be physically generated by the processor at any point and may merely represent logical values which conveniently describe the processing performed by the processor between its input and output.

The processors described herein may be embodied in hardware on an integrated circuit. The processors described herein may be configured to perform any of the methods described herein. Generally, any of the functions, methods, techniques or components described above can be implemented in software, firmware, hardware (e.g., fixed logic circuitry), or any combination thereof. The terms "module," "functionality," "component", "element", "unit", "block" and "logic" may be used herein to generally represent software, firmware, hardware, or any combination thereof. In the case of a software implementation, the module, functionality, component, element, unit, block or logic represents program code that performs the specified tasks when executed on a processor. The algorithms and methods described herein could be performed by one or more processors executing code that causes the processor(s) to perform the algorithms/methods. Examples of a computer-readable storage medium include a random-access memory (RAM), read-only memory (ROM), an optical disc, flash memory, hard disk memory, and other memory devices that may use magnetic, optical, and other techniques to store instructions or other data and that can be accessed by a machine.

The terms computer program code and computer readable instructions as used herein refer to any kind of executable code for processors, including code expressed in a machine language, an interpreted language or a scripting language. Executable code includes binary code, machine code, bytecode, code defining an integrated circuit (such as a hardware description language or netlist), and code expressed in a programming language code such as C, Java or OpenCL. Executable code may be, for example, any kind of software, firmware, script, module or library which, when suitably executed, processed, interpreted, compiled, executed at a virtual machine or other software environment, cause a processor of the computer system at which the executable code is supported to perform the tasks specified by the code.

A processor, computer, or computer system may be any kind of device, machine or dedicated circuit, or collection or portion thereof, with processing capability such that it can execute instructions. A processor may be or comprise any kind of general purpose or dedicated processor, such as a CPU, GPU, NNA, System-on-chip, state machine, media processor, an application-specific integrated circuit (ASIC), a programmable logic array, a field-programmable gate array (FPGA), or the like. A computer or computer system may comprise one or more processors.

It is also intended to encompass software which defines a configuration of hardware as described herein, such as HDL (hardware description language) software, as is used for designing integrated circuits, or for configuring programmable chips, to carry out desired functions. That is, there may be provided a computer readable storage medium having encoded thereon computer readable program code in the form of an integrated circuit definition dataset that when processed (i.e. run) in an integrated circuit manufacturing system configures the system to manufacture a processor configured to perform any of the methods described herein, or to manufacture a processor comprising any apparatus described herein. An integrated circuit definition dataset may be, for example, an integrated circuit description.

Therefore, there may be provided a method of manufacturing, at an integrated circuit manufacturing system, a processor as described herein. Furthermore, there may be provided an integrated circuit definition dataset that, when processed in an integrated circuit manufacturing system, causes the method of manufacturing a processor to be performed.

An integrated circuit definition dataset may be in the form of computer code, for example as a netlist, code for configuring a programmable chip, as a hardware description language defining hardware suitable for manufacture in an integrated circuit at any level, including as register transfer level (RTL) code, as high-level circuit representations such as Verilog or VHDL, and as low-level circuit representations such as OASIS (RTM) and GDSII. Higher level representations which logically define hardware suitable for manufacture in an integrated circuit (such as RTL) may be processed at a computer system configured for generating a manufacturing definition of an integrated circuit in the context of a software environment comprising definitions of circuit elements and rules for combining those elements in order to generate the manufacturing definition of an integrated circuit so defined by the representation. As is typically the case with software executing at a computer system so as to define a machine, one or more intermediate user steps (e.g. providing commands, variables etc.) may be required in order for a computer system configured for generating a manufacturing definition of an integrated circuit to execute code defining an integrated circuit so as to generate the manufacturing definition of that integrated circuit.

An example of processing an integrated circuit definition dataset at an integrated circuit manufacturing system so as to configure the system to manufacture a processor will now be described with respect to Figure 5.

Figure 5 shows an example of an integrated circuit (IC) manufacturing system 1002 which is configured to manufacture a processor as described in any of the examples herein. In particular, the IC manufacturing system 1002 comprises a layout processing system 1004 and an integrated circuit generation system 1006. The IC manufacturing system 1002 is configured to receive an IC definition dataset (e.g. defining a processor as described in any of the examples herein), process the IC definition dataset, and generate an IC according to the IC definition dataset (e.g. which embodies a processor as described in any of the examples herein). The processing of the IC definition dataset configures the IC manufacturing system 1002 to manufacture an integrated circuit embodying a processor as described in any of the examples herein.

The layout processing system 1004 is configured to receive and process the IC definition dataset to determine a circuit layout. Methods of determining a circuit layout from an IC definition dataset are known in the art, and for example may involve synthesising RTL code to determine a gate level representation of a circuit to be generated, e.g. in terms of logical components (e.g. NAND, NOR, AND, OR, MUX and FLIP-FLOP components). A circuit layout can be determined from the gate level representation of the circuit by determining positional information for the logical components. This may be done automatically or with user involvement in order to optimise the circuit layout. When the layout processing system 1004 has determined the circuit layout it may output a circuit layout definition to the IC generation system 1006. A circuit layout definition may be, for example, a circuit layout description.

The IC generation system 1006 generates an IC according to the circuit layout definition, as is known in the art. For example, the IC generation system 1006 may implement a semiconductor device fabrication process to generate the IC, which may involve a multiple-step sequence of photo lithographic and chemical processing steps during which electronic circuits are gradually created on a wafer made of semiconducting material. The circuit layout definition may be in the form of a mask which can be used in a lithographic process for generating an IC according to the circuit definition.

Alternatively, the circuit layout definition provided to the IC generation system 1006 may be in the form of computer-readable code which the IC generation system 1006 can use to form a suitable mask for use in generating an IC.

The different processes performed by the IC manufacturing system 1002 may be implemented all in one location, e.g. by one party. Alternatively, the IC manufacturing system 1002 may be a distributed system such that some of the processes may be performed at different locations, and may be performed by different parties. For example, some of the stages of: (i) synthesising RTL code representing the IC definition dataset to form a gate level representation of a circuit to be generated, (ii) generating a circuit layout based on the gate level representation, (iii) forming a mask in accordance with the circuit layout, and (iv) fabricating an integrated circuit using the mask, may be performed in different locations and/or by different parties.

In other examples, processing of the integrated circuit definition dataset at an integrated circuit manufacturing system may configure the system to manufacture a processor without the IC definition dataset being processed so as to determine a circuit layout. For instance, an integrated circuit definition dataset may define the configuration of a reconfigurable processor, such as an FPGA, and the processing of that dataset may configure an IC manufacturing system to generate a reconfigurable processor having that defined configuration (e.g. by loading configuration data to the FPGA).

In some embodiments, an integrated circuit manufacturing definition dataset, when processed in an integrated circuit manufacturing system, may cause an integrated circuit manufacturing system to generate a device as described herein. For example, the configuration of an integrated circuit manufacturing system in the manner described above with respect to Figure 5 by an integrated circuit manufacturing definition dataset may cause a device as described herein to be manufactured.

In some examples, an integrated circuit definition dataset could include software which runs on hardware defined at the dataset or in combination with hardware defined at the dataset. In the example shown in Figure 5, the IC generation system may further be configured by an integrated circuit definition dataset to, on manufacturing an integrated circuit, load firmware onto that integrated circuit in accordance with program code defined at the integrated circuit definition dataset or otherwise provide program code with the integrated circuit for use with the integrated circuit.

The implementation of concepts set forth in this application in devices, apparatus, modules, and/or systems (as well as in methods implemented herein) may give rise to performance improvements when compared with known implementations. The performance improvements may include one or more of increased computational performance, reduced latency, increased throughput, and/or reduced power consumption. During manufacture of such devices, apparatus, modules, and systems (e.g. in integrated circuits) performance improvements can be traded-off against the physical implementation, thereby improving the method of manufacture. For example, a performance improvement may be traded against layout area, thereby matching the performance of a known implementation but using less silicon. This may be done, for example, by reusing functional blocks in a serialised fashion or sharing functional blocks between elements of the devices, apparatus, modules and/or systems. Conversely, concepts set forth in this application that give rise to improvements in the physical implementation of the devices, apparatus, modules, and systems (such as reduced silicon area) may be traded for improved performance. This may be done, for example, by manufacturing multiple instances of a module within a predefined area budget.

The applicant hereby discloses in isolation each individual feature described herein and any combination of two or more such features, to the extent that such features or combinations are capable of being carried out based on the present specification as a whole in the light of the common general knowledge of a person skilled in the art, irrespective of whether such features or combinations of features solve any problems disclosed herein. In view of the foregoing description it will be evident to a person skilled in the art that various modifications may be made within the scope of the invention.

**Claims**

1. A processor (100) comprising:

normalization circuitry (124) configured to re-encode a normal value of a first floating point format to a normalized floating point format and to re-encode a subnormal value of the first floating point format to the normalized floating point format, wherein the first floating point format comprises an m-bit mantissa field and an e-bit exponent field, and wherein the normalized floating point format comprises a mantissa field and an exponent field, the exponent field of the normalized floating point format having at least e+1 exponent bits for both normal and subnormal values for representing the normal and subnormal values on a common exponential scale; and
floating point logic circuitry (122) operable to perform a floating point operation combining the normal and subnormal values, the floating point logic circuitry being configured to perform the floating point operation on the values as re-encoded in the normalized floating point format;

wherein the floating point logic circuitry is further able to operate on one or more exceptional values, being configured to operate on each exceptional value represented in the normalized floating point format; and wherein the normalized floating point format employs a subset of the exponent bits of the exponent field of the normalized floating point format to encode a predetermined indication of being an exceptional value for each exceptional value, the subset being a plurality of bits but fewer bits than e bits, wherein a combination of bit values used to encode said predetermined indication does not occur within a range of the exponent field of the normalized floating point format used to represent any possible non-exceptional, normal and subnormal values, the floating point logic circuitry being configured to detect the exceptional values as being exceptional values by reading only said subset of exponent bits.

2. The processor of claim 1, wherein each exceptional value is either an infinity or a NaN, not a number.

3. The processor of claim 1 or 2, wherein the floating point logic circuitry (122) is able to operate on exceptional values of different types, and the normalized format employs a further portion of the exponent bits of the normalized floating point format to encode a type indicator to indicate the type of each exceptional value, the floating point logic circuitry being configured to detect the type of each exceptional value from the respective type indicator in said further portion without checking the mantissa field of the normalized floating point number format.

4. The processor of claim 3 as dependent on claim 2, wherein one of the different types is infinity and another of the different types is a NaN.

5. The processor of claim 3 or 4, wherein at least some of the exceptional values are NaNs, and the different types include at least different types of NaN; and optionally wherein the different types of NaN include at least a NaN-boxed NaN and non-Nan-boxed NaN.

6. The processor of any preceding claim, wherein said subset comprises the two most significant bits of the exponent field of the normalized floating point format, and said combination is both bit values being 1.

7. The processor of claim 6 as dependent on any of claims 3 to 5, wherein said the further portion is at least one next-most significant bit after the two most significant bits.

8. The processor of any preceding claim, wherein the re-encoding is performed by:

for the subnormal value:

- determining a leading zero count, *LZC,* of the bits in the mantissa field of the first format,
- shifting the bits of the mantissa field of the first floating point format left by an amount *shift* equal to *LZC*+1, thereby giving the mantissa field of the normalized floating point format, and
- subtracting from the exponent field of the first floating point format an amount equal to (*bias'-bias*)-*shift,* thereby giving the exponent of the normalized floating point format, where *bias'* is an optional bias of the normalized format and *bias* is an optional bias of the first format; and

for the normal value:

- determining the exponent field of the first floating point format to be exp = exp' - bias', where exp' is the exponent field of the normalized floating point format, and
- shifting the bits of the mantissa field of the normalized floating point format right by an amount A = (-bias + 1) - (exp' - bias'), thereby giving the mantissa field of the first floating point format.

9. The processor of any preceding claim, comprising a plurality of normalized-format registers (114) each for holding a value in the normalized floating point format and optionally a plurality of first-format registers (112) each for holding a value in the first floating point format; wherein the normalization logic (124) is configured to perform said normalization automatically when the normal value is loaded into a respective one of the normalized-format registers or moved to the respective normalized format register from one of the first-format registers, and to perform said normalization of the subnormal value automatically when the subnormal value is loaded into a respective one of the normalized format registers or moved to the respective normalized-format register from one of the first-format registers; and wherein the floating point logic circuitry (122) is configured to take the normal and subnormal values from the respective normalized-format registers to perform the floating point operation on.

10. The processor of any preceding claim, comprising a plurality of normalized-format registers (114) each for holding a value in the normalized floating point format and optionally a plurality of first-format registers (112) each for holding a value in the first floating point format; wherein the processor further comprises register write-back circuitry (128) configured to place a result of the floating point operation in a destination register of the normalized-format registers in the normalized format from whence it can be operated on in the normalized floating point format by a further operation; and the processor further comprises de-normalization logic (126) configured to convert the result from the destination register to the first floating point format when the result is read by software, saved to memory or moved to one of the first-format registers.

11. The processor of any preceding claim, wherein the mantissa field of the normalized floating point format is an m-bit mantissa field.

12. The processor of any preceding claim, wherein in the first floating point number format any exceptional value is encoded by the exponent field being all 1s; and optionally wherein in the first floating point format infinity encoded as exponent all 1s and mantissa field all 0s, and NaN is encoded exponent field all 1s and mantissa field non-zero.

13. A method implemented in software or hardware or a combination thereof, the method comprising:

re-encoding a normal value of a first floating point format to a normalized floating point format and to re-encode a subnormal value of the first floating point format to the normalized floating point format, wherein the first floating point format comprises an m-bit mantissa field and an e-bit exponent field, and wherein the normalized floating point format comprises a mantissa field and an exponent field, the exponent field of the normalized floating point format having at least e+1 exponent bits for both normal and subnormal values for representing the normal and subnormal values on a common exponential scale;

performing a floating point operation combining the normal and subnormal values as re-encoded in the normalized floating point format; and

performing a further operation on an exceptional value represented in the normalized floating point format; wherein the normalized floating point format employs a subset of the exponent bits of the exponent field of the normalized floating point format to encode a predetermined indication of being an exceptional value for each exceptional value, the subset being a plurality of bits but fewer bits than e bits, wherein a combination of bit values used to encode said predetermined indication does not occur within a range of the exponent field of the normalized floating point format used to represent any possible non-exceptional, normal and subnormal values; and

wherein the further operation comprises detecting the exceptional value as being an exceptional value by reading only said subset of exponent bits, and operating on the exceptional value in dependence on said detection.

14. A method of manufacturing, using an integrated circuit manufacturing system, a processor as claimed in any of claims 1 to 12, the method comprising:

processing, using a layout processing system, a computer readable description of the processor so as to generate a circuit layout description of an integrated circuit embodying the processor; and

manufacturing, using an integrated circuit generation system, the processor according to the circuit layout description.

15. An integrated circuit definition dataset that, when processed in an integrated circuit manufacturing system, configures the integrated circuit manufacturing system to manufacture a processor as claimed in any of claims 1 to 12.

**FIGURE 1**

$$\overbrace{sign}^{1 \text{ bit}} . \overbrace{exp}^{e \text{ bits}} . \overbrace{mant}^{m \text{ bits}}$$

**FIGURE 2**

$$\overbrace{sign}^{1 \text{ bit}} . \overbrace{exp'}^{e+1 \text{ bits}} . \overbrace{mant'}^{m \text{ bits}}$$

**FIGURE 3**

$$\overbrace{sign}^{1 \text{ bit}} . \overbrace{\underbrace{exp'}_{\substack{\text{First} \\ \text{subset} \\ (301)}\ \substack{\text{Further} \\ \text{portion} \\ (302)}}}^{e+1 \text{ bits}} . \overbrace{mant'}^{m \text{ bits}}$$

**FIGURE 3A**

902                    904

CPU                    GPU                                    914

[910]                                              Display    916

                                                   Speakers   918

920                                                Camera     922

906    Memory          NNA

       [912]                  908

**FIGURE 4**

                        1002
            1004                    1006

IC definition  →  Layout    Circuit layout  Integrated  →  Integrated
dataset           processing  definition     circuit         circuit
                                            generation

**FIGURE 5**

Europäisches
Patentamt
European
Patent Office
Office européen
des brevets

## EUROPEAN SEARCH REPORT

**Application Number**

EP 25 19 3270

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | A: "APPENDIX C IEEE ARITHMETIC - DSP96002 USER'S MANUAL", , 1 January 1996 (1996-01-01), XP055816221, Retrieved from the Internet: URL:http://noel.feld.cvut.cz/vyu/scs/motorola/96002/C.PDF [retrieved on 2021-06-21] * section C.1.1, C.1.5; figures C-10a * | 1-15 | INV. G06F7/483 G06F7/499 |
| A | US 9 170 773 B2 (IBM [US]) 27 October 2015 (2015-10-27) * column 7, line 21 - column 8, line 39; figure 7 * | 1-15 | |
| A | US 2002/178199 A1 (STEELE GUY L [US]) 28 November 2002 (2002-11-28) * paragraph [0056] - paragraph [0064]; figure 2 * | 1-15 | |

**TECHNICAL FIELDS SEARCHED (IPC)**

G06F

The present search report has been drawn up for all claims

| Place of search | Date of completion of the search | Examiner |
|---|---|---|
| Munich | 17 December 2025 | Prins, Leendert |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

......................................................................................................
& : member of the same patent family, corresponding
    document

EPO FORM 1503 03.82 (P04C01)

## ANNEX TO THE EUROPEAN SEARCH REPORT
## ON EUROPEAN PATENT APPLICATION NO.

EP 25 19 3270

This annex lists the patent family members relating to the patent documents cited in the above-mentioned European search report.
The members are as contained in the European Patent Office EDP file on
The European Patent Office is in no way liable for these particulars which are merely given for the purpose of information.

17-12-2025

| Patent document cited in search report | | Publication date | Patent family member(s) | | Publication date |
|---|---|---|---|---|---|
| US 9170773 | B2 | 27-10-2015 | US | 2013212139 A1 | 15-08-2013 |
| | | | US | 2014101216 A1 | 10-04-2014 |
| US 2002178199 | A1 | 28-11-2002 | NONE | | |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- GB 2411706 A